# EUROPÄISCHE PATENTSCHRIFT

(11) **EP 0 352 434 B1**
(45) Veröffentlichungstag und Bekanntmachung des Hinweises auf die Patenterteilung: **04.08.1993**
(21) Anmeldenummer: 89109561.4
(22) Anmeldetag: 26.05.1989
(51) Int. Cl.: B60N 3/08

(54) **Ascher, insbesondere für Fahrzeuge**
Ash tray especially for vehicles
Cendrier notamment pour véhicules

(30) Priorität: 29.07.1988 DE 3825828
(43) Veröffentlichungstag der Anmeldung: 31.01.1990
(73) Patentinhaber: Gebr. Happich GmbH, D-42097 Wuppertal (DE)
(72) Erfinder: Dietz, Günter, D-5600 Wuppertal 1 (DE); Dabringhaus, Volker, D-5600 Wuppertal 1 (DE); Wegel, Peter, D-5600 Wuppertal 2 (DE)

(56) Entgegenhaltungen:
- EP-A- 0 243 857
- US-A- 4 466 449

## Beschreibung

Die Erfindung bezieht sich auf einen Ascher, insbesondere für Fahrzeuge, bestehend aus einem Gehäuse mit einer darin schubladenartig angeordneten Ascherlade, die einen Boden, zwei Seitenwände, eine Frontwand und eine Rückwand aufweist, wobei ein Entriegelungsmechanismus, zu dem eine im Bereich der Frontwand der Ascherlade angeordnete Betätigungstaste gehört, an der Ascherlade angeordnet ist.

Bei schubladenartig in Gehäusen aufgenommenen Behältern sind in der Regel überwindbare Anschläge vorgesehen, die verhindern sollen, daß die Behälter sich ungewollt öffnen oder völlig aus den Gehäusen herausgezogen werden. Ascher für Fahrzeuge z.B. weisen üblicherweise als Auszugssperre eine mehrfach abgewinkelte, gegen einen Gehäuseanschlag wirkende Blattfeder (vgl. z.B. deutsche Gebrauchsmusterschrift DE-U-7 805 800) auf. Hierbei ist es nachteilig, daß die Blattfeder zwecks Entriegelung ins Behälterinnere hineingedrückt werden muß, wobei es leicht zur Fingerbeschmutzung kommen kann. Ascher mit Öffnungssperre und Öffnungsautomatik sind nur als Kippascher bekannt (vgl. US-A-4 462 630) und sehr kompliziert im Aufbau. Ein weiterer Ascher ist vom EP-A-0 243 857, dem Oberbegriff entsprechend, bekannt.

Der Erfindung liegt vornehmlich die Aufgabe zugrunde, einen Ascher für Fahrzeuge zur Verfügung zu stellen, der einen solcherart ausgebildeten Entriegelungsmechanismus aufweist, daß einerseits eine Fingerbeschmutzung, wie auch Klappergeräusche, vermieden und andererseits ein besonders bedienungsfreundliches Entriegeln und ein Wegfall von störend ins Behälterinnere hineinragender Entriegelungselemente erreicht wird.

Zur Lösung dieser Aufgabe ist erfindungsgemäß vorgesehen, daß das Gehäuse zumindest einen Gehäuseanschlag und die Ascherlade einen diesen hintergreifenden, die Ascherlade im Gehäuse sichernden Schließriegel, der an der Rückwand der Ascherlade beweglich geführt angeordnet ist, trägt, wobei der Schließriegel ein Teil des an der Ascherlade angeordneten Entriegelungsmechanismusses ist, zu dem auch ein Übertragungselement zwischen dem Schließriegel und der Betätigungstaste, mittels der der Schließriegel gegen eine Rückstellkraft vom Gehäuseanschlag wegbewegbar ist, gehört.

Die erfindungsgemäßen Maßnahmen ermöglichen eine einfache und kostengünstige Herstellung des Aschers und dessen Entriegelungsmechanismus, gewährleisten ein Entriegeln, um die Ascherlade aus einer Nichtgebrauchslage in eine Gebrauchslage überführen und/oder die Ascherlade völlig aus dem Gehäuse ohne Fingebeschmutzung herausziehen zu können und ermöglichen zudem eine frei zugängliche Benutzung der Ascherlade, weil keine Teile des Entriegelungsmechanismusses ins Innere der Ascherlade hineinragen. Darüber hinaus ist der Entriegelungsmechanismus so konzipiert, daß eine Klapperfreiheit ebenso gewährleistet ist, wie ein leichtes Einschieben der Ascherlade in ein Gehäuse.

In Weiterbildung der Erfindung ist vorgesehen, daß die Rückstellkraft durch ein Federmittel erzeugt wird, das aus einer Druckfeder, wie Schraubenfeder bestehen kann.

Gemäß einer Ausführungsform der Erfindung kann vorgesehen sein, daß der Entriegelungsmechanismus aus einem an der Ascherlade außen geführten Schieber, einem an der Ascherlade geführten Schließriegel, einem in einer Ausnehmung des Schließriegels angeordneten Druckelement und einem in derselben Ausnehmung angeordneten, das Druckelement senkrecht gegen den Schieber belastenden Federmittel besteht, wobei der Schieber an einem Endbereich eine quer zur Längserstreckung ausgerichtete V-förmige Ausbildung und dadurch eine erste und eine gegenüber dieser entgegengesetzt wirkend ausgerichtete zweite Schrägfläche aufweist, von denen die erste mit einer damit korrespondierenden Schrägfläche des Schließriegels und die zweite mit einer damit korrespondierenden Schrägfläche des Druckelements derart zusammenwirkt, daß bei einer Schieberbetätigung eine Entriegelungsbewegung des Schließriegels und gleichzeitig eine dieser entgegengesetzte Bewegung des Druckelements erfolgt. Dabei ist es von Vorteil, wenn in Ausgestaltung der Erfindung vorgesehen wird, daß die Schrägflächen jeweils einen Steigungswinkel von 45 Grad mit Bezug auf die Bewegungsrichtung des Schiebers aufweisen.

Es ist weiterhin von Vorteil, wenn der Schließriegel unverlierbar an der Ascherlade angeordnet ist und zwecks Begrenzung seines Bewegungshubes einen sich an einem Anschlag der Ascherlade abstützenden Nocken aufweist.

Auch ist es vorteilhaft, wenn der Riegel an seinem mit dem jeweiligen Gehäuseanschlag zusammenwirkenden Ende eine Auflaufschräge aufweist.

Eine weitere Ausgestaltung der Erfindung besteht darin, daß das Druckelement einendig eine der V-förmigen Ausbildung des einen Schieberendbereichs entsprechende Keilform aufweist. Zwecks Erhöhung des Bedienungskomforts und besseren Aussehens kann weiterhin vorgesehen sein, daß das freie Schieberende als Drucktaste ausgebildet ist.

In weiterer Ausgestaltung der Erfindung befinden sich der Schieber an der Außenseite des Bodens, die Drucktaste an der Frontwand und der Schließriegel an der Außenseite der Rückwand der Ascherlade.

Der Schieber, der Schließriegel und das Druckelement sind zweckmäßigerweise als Kunststoff-Spritzgußteile ausgebildet, wobei es sich aber empfiehlt, Kunststoffmaterialien mit aufeinander leicht gleitenden Eigenschaften zu verwenden.

Gemäß einer anderen Ausführungsform der Erfindung ist vorgesehen, daß der Entriegelungsmechanismus einen Wipphebel als Übertragungsorgan zwischen dem Schließriegel einerseits und der Betätigungstaste andererseits aufweist. Dabei sind am Wipphebel, der in seinem etwa mittigen Bereich außenseitig am Boden der Ascherlade gelagert ist, einendig der Schließriegel und anderendig die Betätigungstaste derart angelenkt, daß der Schließriegel mit jeweils entgegengesetzter Bewegungsrichtung etwa parallel zur Betätigungstaste bewegbar ist.

Bei dieser Ausführungsform der Erfindung ist weiterhin vorgesehen, daß der Wipphebel in schwenkbeweglicher Anordnung von der Ascherlade getragen wird, während der Wipphebel den Schließriegel und die Betätigungstaste in jeweils schwenkbeweglicher Anordnung trägt. Dadurch ist es möglich zunächst den Schließriegel und die Betätigungstaste am Wipphebel anzuordnen und die so geschaffene Baueinheit an der Ascherlade festzulegen.

Die freien Endbereiche des Wipphebels können außenseitig angeformte Lagerzapfen aufweisen, welche zwecks Herstellung schwenkbeweglicher Verbindungen in langlochartig ausgebildete Lageraufnahmen des Schließriegels und der Betätigungstaste einrastbar sind. Durch diese Maßnahme ergibt sich die Möglichkeit einer schnell und einfach durchführbaren Klipsmontage.

Zweckmäßigerweise ist die Ascherlade mit Führungen für den Schließriegel und für die Betätigungstaste ausgebildet. Dabei kann fernerhin vorgesehen sein, daß die Betätigungstaste in die für sie vorgesehene Führung der Ascherlade gegen die Kraft einer sie permanent belastenden Rückstellfeder, die anderendig an der Ascherlade abgestützt ist, einklipsbar ist und daß sich die Betätigungstaste mit Klipsnasen auf Ausnehmungsränder in der Führung abzustützen vermag und gegen die Kraft der Rückstellfeder bewegbar ist, wobei der Bewegungshub der Betätigungstaste über den Wipphebel unmittelbar auf den Schließriegel im Sinne einer Entriegelungsbewegung übertragen wird.

Der Wipphebel, der Schließriegel und die Betätigungstaste sind vorzugsweise als Kunststoff-Spritzgußteile ausgebildet.

Schließlich ist noch vorgesehen, daß der Schließriegel an seinem mit einem Gehäuseanschlag zusammenwirkenden Ende eine Auflaufschräge aufweist.

Ausführungsbeispiele der Erfindung werden im folgenden anhand der Zeichnung näher erläutert. Es zeigen:
- Fig. 1: einen Längsschnitt durch einen Ascher gemäß einer ersten Ausführungsform der Erfindung,
- Fig. 2: einen Längsschnitt durch einen Ascher gemäß einer zweiten Ausführungsform der Erfindung,
- Fig. 3: einen Schnitt A-A nach Fig. 2 und
- Fig. 4: einen Schnitt B-B nach Fig. 2.

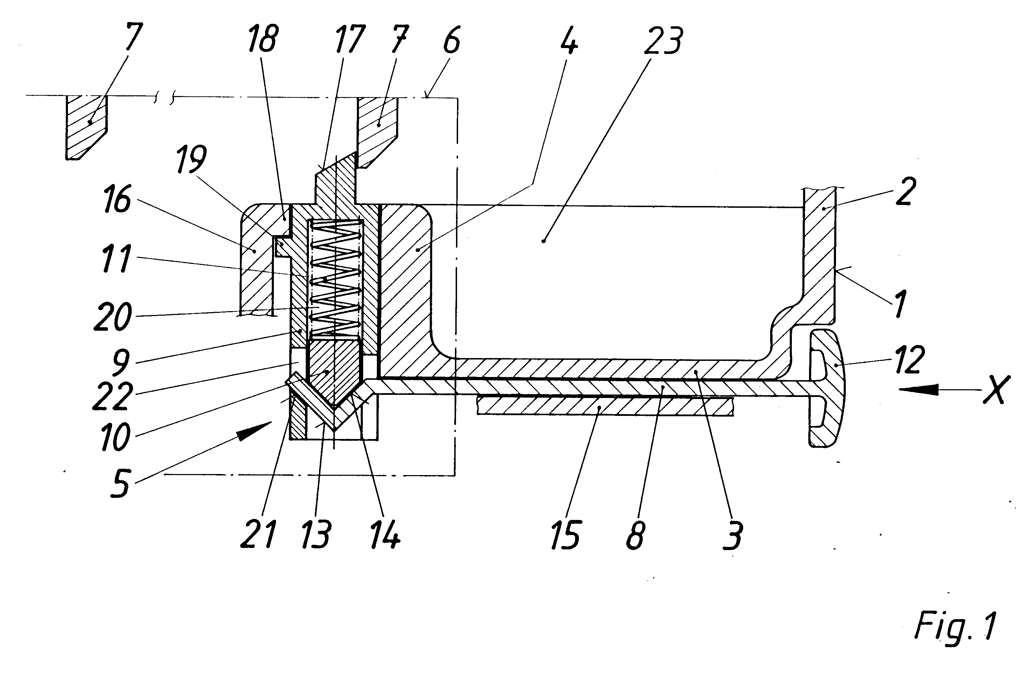

Fig. 1 zeigt einen als Ascher für Fahrzeuge ausgebildeten Behälter, von dem nur die im Zusammenhang mit der vorliegenden Erfindung wesentlichen Teile dargestellt sind.

Der Ascher besteht aus einer Ascherlade 1, umfassend eine Frontwand 2, einen Boden 3, eine Rückwand 4, Seitenwände 23 und eine Entriegelungsmechanismus 5 sowie einem die Ascherlade 1 schubladenartig aufnehmenden, strichpunktiert angedeuteten Gehäuse 6, von dem nur Gehäuseanschläge 7 mit ausgezogenen Linien gezeigt sind.

Der Entriegelungsmechanismus 5 besitzt einen vierteiligen Aufbau und besteht im einzelnen aus einem Schieber 8, einem Schließriegel 9, einem Druckelement 10 und einem hier als Druckfeder 11 ausgebildeten Federmittel. Der Schieber 8 weist einendig eine Drucktaste 12 und anderendig eine V-förmige Ausbildung quer zur Längsachse auf, wodurch eine erste wirksame Schrägfläche 13 und eine dieser entgegengesetzt wirksam ausgerichtete zweite Schrägfläche 14 gebildet werden. Der Schieber 8 ist zwischen dem Boden 3 und einer Führung 15 hin- und herbeweglich geführt.

Der Schließriegel 9 ist senkrecht zum Schieber 8 zwischen der Rückwand 4 und einer Führung 16 hin- und her-, bzw. auf- und abbeweglich, jedoch drehfest, geführt. Der Schließriegel 9 weist einendig eine zum leichten Überwinden eines Gehäuseanschlags 7 dienende Auflaufschräge 17 und anderendig eine gegenüber dem freien Ende zurückversetzte, mit der ersten Schrägfläche 13 des Schiebers 8 korrespondierende Schrägfläche 21 auf, die sich in einem Durchbruch 22 des Riegels 9 befindet. Der Schließriegel 9 weist weiterhin eine als Sackloch ausgebildete Ausnehmung 20 auf, die zur Aufnahme der Druckfeder 11, bei der es sich bevorzugt um eine Schraubenfeder handelt, und des Druckelements 10 dient. Schließlich weist der Schließriegel 9 noch einen an einem Anschlag 18 der Führung 16 zur Anlage kommenden Nocken 19 auf.

Das Druckelement 10 besitzt oberendig eine Stützfläche für die Druckfeder 11, die sich mit ihrem oberen Ende an der Bodenfläche der Ausnehmung abstützt, und unterendig eine der V-förmigen Ausbildung des einen Schieberendes entsprechende Keilform und damit eine mit der Schrägfläche 14 des Schiebers 8 korrespondierende Schrägfläche.

Der Entriegelungsmechanismus 5 arbeitet wie folgt:
Bei einer Beaufschlagung der Drucktaste 12 in Pfeilrichtung X (Andrücken z.B. per Daumen) wird der Schieber 8 in Pfeilrichtung X bewegt. Dabei wirkt die Schrägfläche 13 des Schiebers 8 auf die Schrägfläche 21 des Schließriegels 9, wodurch der Schließriegel 9 nach unten und vom Gehäuseanschlag 7 weggezogen und die Druckfeder 11, die nur unter einer geringen, ein Klappern der Entriegelungsmechanismus-Teile verhindernden Vorspannung steht, gespannt wird. Die Schieberbewegung in Pfeilrichtung X bewirkt aber gleichzeitig mit dem Herunterziehen des Schließriegels 9, und zwar über die Schrägfläche 14 des Schiebers 8 und der damit korrespondierenden Schrägfläche des Druckelements 10, daß dieses innerhalb der Ausnehmung 20 nach oben bewegt wird, wodurch die Druckfeder 11 zusätzlich gespannt wird. Ein Loslassen der Drucktaste 12 bewirkt über die Feder 11 und über die miteinander korrespondierenden Schrägflächen, die alle unter einem 45 Grad-Winkel mit Bezug auf die Bewegungsrichtung des Schiebers 8 stehen, einen umgekehrten Bewegungsablauf. Wesentlich ist, daß die Druckfeder immer unter einer gewissen Vorspannung steht, damit das gesamte Ver- und Entriegelungssystem völlig klapperfrei gehalten wird.

Es liegt im Rahmen der Erfindung, nur den zeichnungslinksseitigen Gehäuseanschlag 7, oder nur den zeichnungsrechtsseitigen Gehäuseanschlag 7 oder beide dargestellten Gehäuseanschläge 7 vorzusehen. Der erstere Fall erlaubt im Zusammenwirken mit dem Entriegelungsmechanismus 5 eine Öffnungsbewegung der Ascherlade 1, der zweite Fall eine Herausziehbewegung der Ascherlade 1 und der dritte Fall sowohl eine Öffnungsbewegung als auch eine Herausziehbewegung der Ascherlade 1.

Es liegt ferner im Rahmen der Erfindung, die Öffnungsbewegung der Ascherlade 1 durch eine z.B. am Gehäuse 6 befestigte Öffnungsfeder od. dgl. zu unterstützen, wobei noch ein zu abruptes Öffnen durch eine Bremse verhindert werden kann.

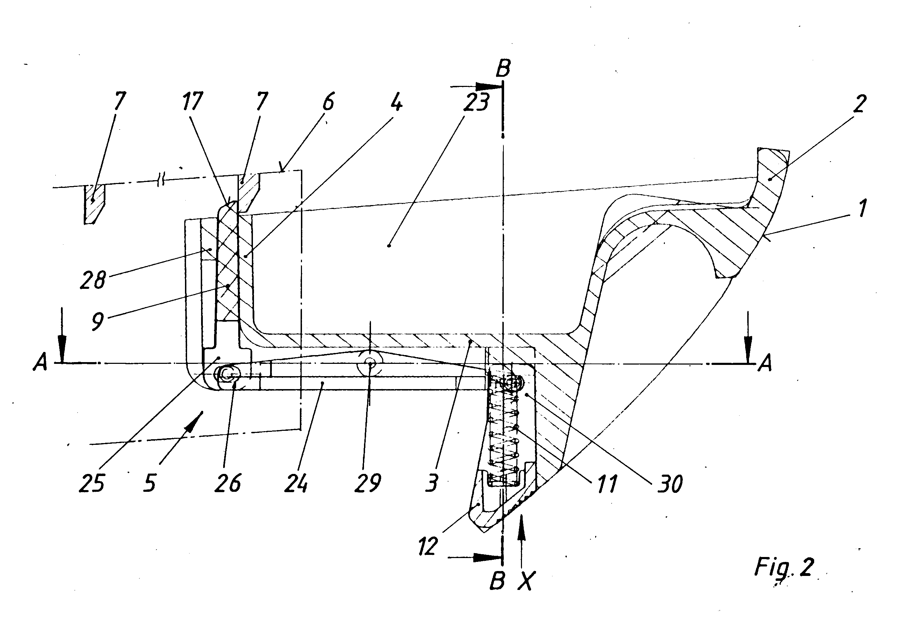

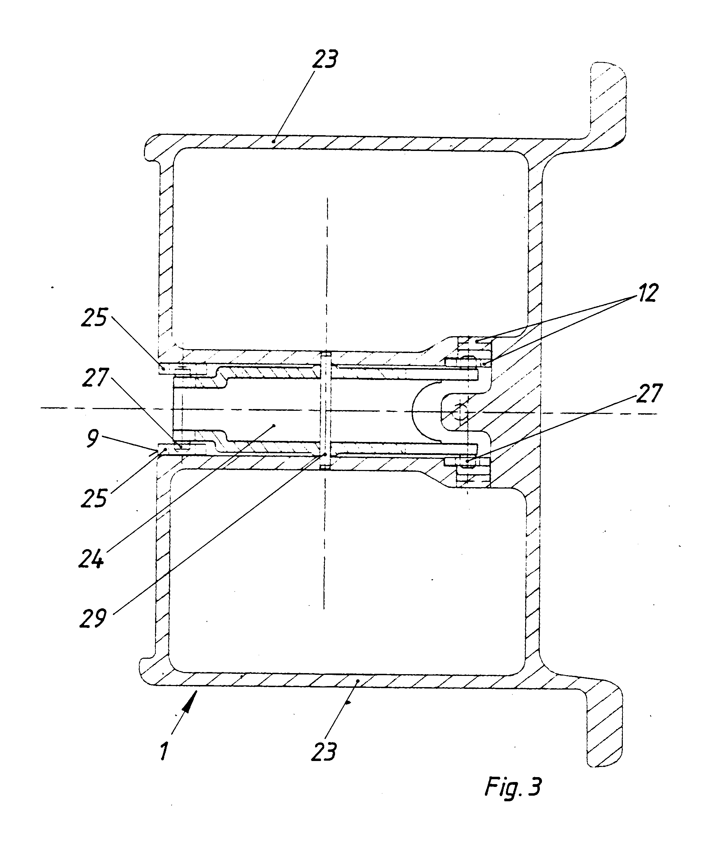

Die Fig. 2 bis 4 zeigen einen gegenüber dem Ausführungsbeispiel nach Fig. 1 abgewandelten Ascher, der, soweit er mit Fig. 1 funktionswesentlich übereinstimmt, die gleichen Bezugszeichen trägt.

Der Ascher gemäß Fig. 2 bis 4 besteht aus einer Ascherlade 1, umfassend eine Frontwand 2, einen Boden 3, eine Rückwand 4, Seitenwände 23 und einen Entriegelungsmechanismus 5 sowie einem die Ascherlade 1 schubladenartig aufnehmenden, strichpunktiert angedeuteten Gehäuse 6, von dem nur Gehäuseanschläge 7 mit ausgezogenen Linien gezeigt sind.

Der Entriegelungsmechanismus 5 weist auch bei diesem Ausführungsbeispiel einen vierteiligen Aufbau auf und besteht im einzelnen aus einem Schließriegel 9, einer Betätigungstaste 12 mit Druckfeder 11 und einem Wipphebel 24 als Übertragungselement zwischen dem Schließriegel 9 und der Betätigungstaste 12, mittels der der Schließriegel 9 gegen die Kraft der Druckfeder 11 vom Gehäuseanschlag 7 wegbewegbar ist.

Der Schließriegel 9 ist einendig mit einer Auflaufschräge 17 versehen, durch die das Einschieben der Ascherlade 1 in das Gehäuse 6 erleichtert wird und anderendig gabelförmig ausgebildet. Die Endbereiche der Gabelarme 25 weisen langlochartige Lageraufnahmen 26 auf, in die am Wipphebel 24 angeordnete Lagerzapfen 27 eingerastet sind. An der Ascherlade 1 ist eine Führung 28 für den Schließriegel 9 vorgesehen.

Zwischen der Führung 28 und der Rückwand 4 der Ascherlade 1 ist der Schließriegel 9 hin- und her- bzw. auf- und abbeweglich geführt.

Der Wipphebel 24 ist in seinem mittigen Bereich über einen Gelenkzapfen 29 schwenkbeweglich an der Ascherlade 1 gelagert. Im Bereich der Lagerstelle weist der Wipphebel einen U-förmigen Querschnitt auf und der Gelenkzapfen 29 durchsetzt die Schenkel des U's. An den freien Endbereichen weist der Wipphebel 24 außenseitig angeformte Lagerzapfen 27 auf, welche zwecks Herstellung schwenkbeweglicher Verbindungen in die langlochartigen Lageraufnahmen 26 des Schließriegels 9 und in ebensolche Lageraufnahmen der Betätigungstaste 12 eingreifen. Der Zusammenbau kann durch einfache Klipsmontage erfolgen.

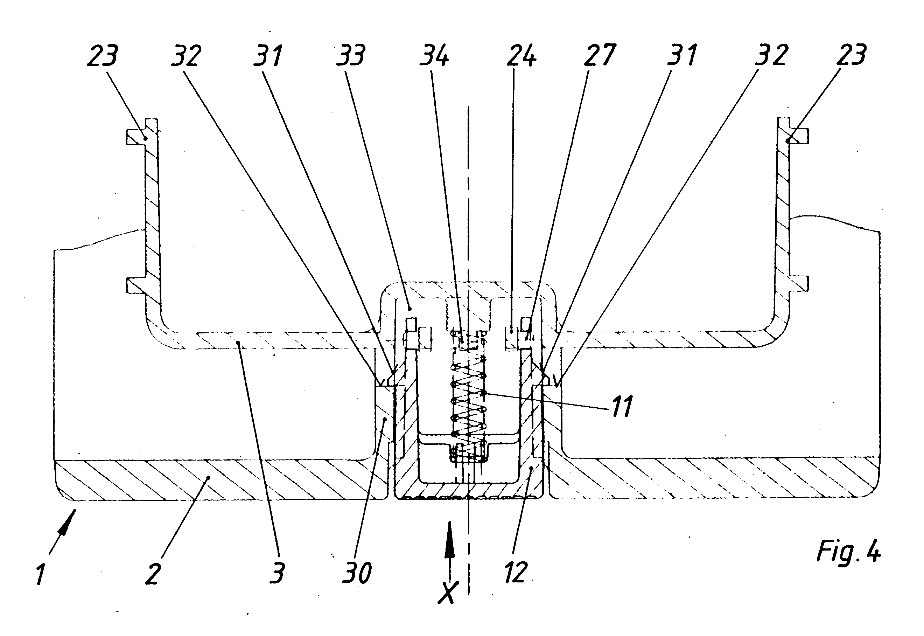

Die Betätigungstaste 12, die vom Wipphebel 24 aufgenommen und in einer Führung 30 der Ascherlade 1 geführt ist, ist - wie insbesondere Fig. 4 erkennen läßt - bereichsweise mit einem U-förmigen Querschnitt ausgebildet, wobei die Schenkel Klipsnasen 31 aufweisen, welche sich auf Ausnehmungsränder 32 in der Führung 30 abstützen. Die Betätigungstaste 12 und damit der gesamte Entriegelungsmechanismus 5 wird durch die Druckfeder 11 (oder ein anderes Federmittel) belastet, so daß die Klipsnasen 31 permanent an den Ausnehmungsrändern 32 anliegen. Bei einer Beaufschlagung der Betätigungstaste 12 in Pfeilrichtung X erfolgt aber ein Abheben der Klipsnasen 31 von den Ausnehmungsrändern 32, damit eine Kippbewegung des Wipphebels 24 und damit schließlich ein Wegziehen des Schließriegels 9 vom Gehäuseanschlag 7.

Wie die Fig. 2 und insbesondere 4 erkennen lassen, ist der Boden 3 der Ascherlade 1 so geformt, daß eine nach unten offene Nut 33 gebildet ist. In dieser Nut 33 ist der Wipphebel 24 mit seinen Anlenkstellen geschützt aufgenommen. Im Bereich der Betätigungstaste 12 befindet sich ein in der Nut 33 angeformter Zapfen 34, der von einem Ende der Druckfeder 11 übergriffen wird. Ein die Druckfeder 11 anderendig aufnehmender Zapfen ist an der Betätigungstaste 12 angeformt.

### Bezugszeichenliste

- 1: Ascherlade
- 2: Frontwand
- 3: Boden
- 4: Rückwand
- 5: Entriegelungsmechanismus
- 6: Gehäuse
- 7: Gehäuseanschlag
- 8: Schieber
- 9: Schließriegel
- 10: Druckelement
- 11: Druckfeder
- 12: Betätigungstaste
- 13: Schrägfläche
- 14: Schrägfläche
- 15: Führung
- 16: Führung
- 17: Auflaufschräge
- 18: Anschlag
- 19: Nocken
- 20: Ausnehmung
- 21: Schrägfläche
- 22: Durchbruch
- 23: Seitenwand
- 24: Wipphebel
- 25: Gabelarm
- 26: Lageraufnahme
- 27: Lagerzapfen
- 28: Führung
- 29: Gelenkzapfen
- 30: Führung
- 31: Klipsnasen
- 32: Ausnehmungsrand
- 33: Nut
- 34: Zapfen

## Patentansprüche

1. Ascher, insbesondere für Fahrzeuge, bestehend aus einem Gehäuse (6) mit einer darin schubladenartig angeordneten Ascherlade (1), die einen Boden (3), zwei Seitenwände (23), eine Frontwand (2) und eine Rückwand (4) aufweist, wobei ein Entriegelungsmechanismus (5), zu dem eine im Bereich der Frontwand (2) der Ascherlade (1) angeordnete Betätigungstaste (12) gehört, an der Ascherlade (1) angeordnet ist, dadurch gekennzeichnet, daß das Gehäuse (6) zumindest einen Gehäuseanschlag (7) und die Ascherlade (1) einen diesen hintergreifenden, die Ascherlade (1) im Gehäuse (6) sichernden Schließriegel (9), der an der Rückwand (4) der Ascherlade (1) beweglich geführt angeordnet ist, trägt, wobei der Schließriegel (9) ein Teil des an der Ascherlade (1) angeordneten Entriegelungsmechanismusses (5) ist, zu dem auch ein Übertragungselement (8, 24) zwischen dem Schließriegel (9) und der Betätigungstaste (12), mittels der der Schließriegel (9) gegen eine Rückstellkraft vom Gehäuseanschlag (7) wegbewegbar ist, gehört.

2. Ascher nach Anspruch 1, dadurch gekennzeichnet, daß die Rückstellkraft durch ein Federmittel erzeugt wird.

3. Ascher nach Anspruch 2, dadurch gekennzeichnet, daß als Federmittel eine Druckfeder (11), wie Schraubenfeder vorgesehen ist.

4. Ascher nach einem der Ansprüche 1 bis 3, dadurch gekennzeichnet, daß der Entriegelungsmechanismus (5) aus einem an der Ascherlade (1) außen geführten Schieber (8), einem an der Ascherlade (1) geführten Schließriegel (9), einem in einer Ausnehmung (20) des Schließriegels (9) angeordneten Druckelement (10) und einem in derselben Ausnehmung (20) angeordneten, das Druckelement (10) senkrecht gegen den Schieber (8) belastenden Federmittel (11) besteht, wobei der Schieber (8) an einem Endbereich eine quer zur Längserstreckung ausgerichtete V-förmige Ausbildung und dadurch eine erste und eine gegenüber dieser entgegengesetzt wirkend ausgerichtete zweite Schrägfläche (13, 14) aufweist, von denen die erste (13) mit einer damit korrespondierenden Schrägfläche (21) des Schließriegels (9) und die zweite (14) mit einer damit korrespondierenden Schrägfläche des Druckelements (10) derart zusammenwirkt, daß bei einer Schieberbetätigung eine Entriegelungsbewegung des Schließriegels (9) und gleichzeitig eine dieser entgegengesetzte Bewegung des Druckelements (10) erfolgt.

5. Ascher nach Anspruch 4, dadurch gekennzeichnet, daß die Schrägflächen (13, 14, 21) jeweils einen Steigungswinkel von 45 Grad mit Bezug auf die Bewegungsrichtung des Schiebers (8) aufweisen.

6. Ascher nach Anspruch 4 oder 5, dadurch gekennzeichnet, daß der Schließriegel (9) unverlierbar an der Ascherlade (1) angeordnet ist und zwecks Begrenzung seines Bewegungshubes einen, sich an einem Anschlag (18) der Ascherlade (1) abstützenden Nocken (19) aufweist.

7. Ascher nach einem der Ansprüche 4 bis 6, dadurch gekennzeichnet, daß das Druckelement (10) einendig eine der V-förmigen Ausbildung des einen Schieberendbereichs entsprechende Keilform aufweist.

8. Ascher nach einem der Ansprüche 4 bis 7, dadurch gekennzeichnet, daß das freie Schieberende als Drucktaste (12) ausgebildet ist.

9. Ascher nach einem der Ansprüche 4 bis 8, dadurch gekennzeichnet, daß sich der Schieber (8) an der Außenseite des Bodens (3), die Drucktaste (12) an der Frontwand (2) und der Schließriegel (9) an der Außenseite der Rückwand (4) der Ascherlade (1) befinden.

10. Ascher nach einem der Ansprüche 4 bis 9, dadurch gekennzeichnet, daß der Schieber (8), der Schließriegel (9) und das Druckelement (10) als Kunststoff-Spritzgußteile ausgebildet sind.

11. Ascher nach einem der Ansprüche 1 bis 3, dadurch gekennzeichnet, daß der Entriegelungsmechanismus (5) einen Wipphebel (24) als Übertragungsorgan zwischen dem Schließriegel (9) einerseits und der Betätigungstaste (12) andererseits aufweist.

12. Ascher nach Anspruch 11, dadurch gekennzeichnet, daß an dem Wipphebel (24), der in seinem etwa mittleren Bereich außenseitig am Boden (3) der Ascherlade (1) gelagert ist, einendig der Schließriegel (9) und anderendig die Betätigungstaste (12) derart angelenkt sind, daß der Schließriegel (9) mit jeweils entgegengesetzter Bewegungsrichtung etwa parallel zur Betätigungstaste (12) bewegbar ist.

13. Ascher nach Anspruch 11 oder 12, dadurch gekennzeichnet, daß der Wipphebel (24) in schwenkbeweglicher Anordnung von der Ascherlade (1) getragen wird, während der Wipphebel (24) den Schließriegel (9) und die Betätigungstaste (12) in jeweils schwenkbeweglicher Anordnung trägt.

14. Ascher nach einem der Ansprüche 11 bis 13, dadurch gekennzeichnet, daß die freien Endbereiche des Wipphebels (24) außenseitig angeformte Lagerzapfen (27) aufweisen, welche zwecks Herstellung schwenkbeweglicher Verbindungen in langlochartig ausgebildete Lageraufnahmen (26) des Schließriegels (9) und der Betätigungstaste (12) einrastbar sind.

15. Ascher nach einem der Ansprüche 11 bis 14, dadurch gekennzeichnet, daß die Ascherlade (1) mit Führungen (28, 30) für den Schließriegel (9) und für die Betätigungstaste (12) ausgebildet ist.

16. Ascher nach einem der Ansprüche 11 bis 15, dadurch gekennzeichnet, daß die Betätigungstaste (12) in die für sie vorgesehene Führung (30) der Ascherlade (1) gegen die Kraft einer sie permanent belastenden Rückstellfeder (11), die anderendig an der Ascherlade (1) abgestützt ist, einklipsbar ist und daß sich die Betätigungstaste (12) mit Klipsnasen (31) auf Ausnehmungsränder (32) in der Führung (30) abzustützen vermag und gegen die Kraft der Rückstellfeder (11) bewegbar ist, wobei der Bewegungshub der Betätigungstaste (12) über den Wipphebel (24) unmittelbar auf den Schließriegel (9) im Sinne einer Entriegelungsbewegung übertragen wird.

17. Ascher nach einem der Ansprüche 11 bis 16, dadurch gekennzeichnet, daß der Wipphebel (24), der Schließriegel (9) und die Betätigungstaste (12) als Kunststoff-Spritzgußteile ausgebildet sind.

18. Ascher nach einem der Ansprüche 1 bis 17, dadurch gekennzeichnet, daß der Schließriegel (9) an seinem mit einem Gehäuseanschlag (7) zusammenwirkenden Ende eine Auflaufschräge (17) aufweist.

## Claims

1. An ash-tray, especially for vehicles, comprising a housing (6) with an ash-tray case (1), arranged therein in the manner of a drawer, which case has a base (3), two side walls (23), a front wall (2) and a rear wall (4), in which an unlocking mechanism (5), belonging to which is an operating key (12) arranged in the region of the front wall (2) of the ash-tray case (1), is arranged on the ash-tray case (1), characterised in that the housing (6) carries at least one housing stop (7) and the ash-tray case (1) carries a closure bolt (9), engaging behind this stop and securing the ash-tray case (1) in the housing (6), which closure bolt (9) is arranged so as to be guided movably on the rear wall (4) of the ash-tray case (1), in which the closure bolt (9) is a part of the unlocking mechanism (5) arranged on the ash-tray case (1), belonging to which there is also a transfer element (8, 24) between the closure bolt (9) and the operating key (12), by means of which the closure bolt (9) is able to be moved away from the housing stop (7) against a restoring force.

2. An ash-tray according to Claim 1, characterised in that the restoring force is produced by a spring means.

3. An ash-tray according to Claim 2, characterised in that as spring means a compression spring (11), such as a helical spring, is provided.

4. An ash-tray according to any one of Claims 1 to 3, characterised in that the unlocking mechanism (5) comprises a sliding member (8), guided externally on the ash-tray case (1), the closure bolt (9), guided on the ash-tray case (1), a pressure element (10) arranged in a recess (20) of the closure bolt (9), and a spring means (11), arranged in the same recess (20) and urging the pressure element (10) vertically against the sliding member (8), in which the sliding member (8) has at one end region a V-shaped construction aligned transversely to the longitudinal extent, and thereby has two inclined faces (13, 14) aligned so as to act in opposition with respect thereto, the first (13) of which cooperates with an inclined face (21) of the closure bolt (9) corresponding thereto, and the second (14) of which cooperates with an inclined face of the pressure element (10) corresponding thereto, such that when the sliding member is actuated an unlocking movement of the closure bolt (9) takes place and, at the same time, a movement of the pressure element (10) opposed thereto.

5. An ash-tray according to Claim 4, characterised in that the inclined faces (13, 14, 21) in each case have an angle of inclination of 45 degrees with respect to the direction of movement of the sliding member (8).

6. An ash-tray according to Claim 4 or 5, characterised in that the closure bolt (9) is arranged integrally on the ash-tray case (1) and, to delimit its movement stroke, has a cam (19) resting on a stop (18) of the ash-tray case (1).

7. An ash-tray according to any one of Claims 4 to 6, characterised in that the pressure element (10) has at one end a wedge shape corresponding to the V-shaped construction of one sliding member end region.

8. An ash-tray according to any one of Claims 4 to 7, characterised in that the free sliding member end is constructed as a push-button (12).

9. An ash-tray according to any one of Claims 4 to 8, characterised in that the sliding member (8) is on the exterior of the base (3), the push-button (12) is on the front wall (2) and the closure bolt (9) is on the exterior of the rear wall (4) of the ash-tray case (1).

10. An ash-tray according to any one of Claims 4 to 9, characterised in that the sliding member (8), the closure bolt (9) and the pressure element (10) are constructed as injection-plastics die castings.

11. An ash-tray according to any one of Claims 1 to 3, characterised in that the unlocking mechanism (5) has a rocking lever (24) as transfer member between the closure bolt (9) on the one hand and the operating key (12) on the other hand.

12. An ash-tray according to Claim 11, characterised in that on the rocking lever (24), which is mounted approximately at its central region externally on the base (3) of the ash-tray case (1), the closure bolt (9) is articulated at one end and the operating key (12) is articulated at the other end, such that the closure bolt (9) is movable in opposite directions approximately parallel to the operating key (12).

13. An ash-tray according to Claim 11 or 12, characterised in that the rocking lever (24) is carried by the ash-tray case (1) in an arrangement so as to be movable in a swiveling manner, whereas the rocking lever (24) carries the closure bolt (9) and the operating key (12) in each case in an arrangement so as to be movable in a swiveling manner.

14. An ash-tray according to any one of Claims 11 to 13, characterised in that the free end regions of the rocking lever (24) have bearing pins (27) formed on the exterior, which, in order to produce connections which are movable in a swivelling manner, are able to be engaged in bearing mountings (26) of the closure bolt (9) and of the operating key (12) which are constructed in the manner of slotted holes.

15. An ash-tray according to any one of Claims 11 to 14, characterised in that the ash-tray case (1) is formed with guides (28,30) for the closure bolt (9) and for the operating key (12).

16. An ash-tray according to any one of Claims 11 to 15, characterised in that the operating key (12) is able to be clipped into the guide (30) of the ash-tray case (1), provided for it, against the force of a restoring spring (11), loading it permanently, which rests at the other end on the ash-tray case (1), and that the operating key (12) is able to rest with clip projections (31) on recess edges (32) in the guide (30) and is movable against the force of the restoring spring (11), in which the movement stroke of the operating key (12) via the rocking lever (24) is transferred directly onto the closure bolt (9) in the direction of an unlocking movement.

17. An ash-tray according to any one of Claims 11 to 16, characterised in that the rocking lever (24), the closure bolt (9) and the operating key (12) are constructed as injection-plastics die castings.

18. An ash-tray according to any one of Claims 1 to 17, characterised in that the closure bolt (9) has an abutting incline (17) at its end cooperating with a housing stop (7).

## Revendications

1. Cendrier, en particulier pour véhicules, composé d'un boîtier (6), comportant un réceptacle à cendres (1) disposé à l'intérieur à la façon d'un tiroir, présentant un fond (3) deux parois latérales (23), une paroi avant (2) et une paroi arrière (4) un mécanisme de déverrouillage (5), auquel appartient une touche d'actionnement (12) disposée dans la zone de la face avant (2) du réceptacle à cendres (1), sur laquelle est disposé le réceptacle à cendres (1), caractérisé en ce que le boîtier (6) porte au moins une butée de boîtier (7) et le réceptacle à cendres (1) porte un verrou de fermeture (9) saisissant celui-ci par l'arrière, fixant le réceptacle à cendres (1) dans le boîtier (6) et disposé de façon guidée mobile sur la paroi arrière du réceptacle à cendres (1), le verrou de fermeture (9) faisant partie du mécanisme de déverrouillage disposé sur le réceptacle à cendres (1), auquel appartient également un mécanisme de transmission (8, 24) situé entre le verrou de fermeture (9) et la touche d'action (12), au moyen de laquelle le verrou de fermeture (9) est susceptible d'être écarté de la butée de boîtier (7) à l'encontre d'une force de rappel.

2. Cendrier selon la revendication 1, caractérisé en ce que la force de rappel est produite par un moyen élastique.

3. Cendrier selon la revendication 2, caractérisé en ce qu'un ressort de pression (11) tel qu'un ressort hélicoïdal est prévu à titre de moyen élastique.

4. Cendrier selon l'une des revendications 1 à 3, caractérisé en ce que le mécanisme de déverrouillage (5) est composé d'un poussoir (8) guidé extérieurement sur le réceptacle à cendres (1) d'un verrou de fermeture (9) guidé sur le réceptacle à cendres (1), d'un élément de pression (10) disposé dans un évidement (20) du verrou de fermeture (9) et d'un moyen élastique (11) disposé dans le même évidement (20) et sollicitant l'élément de pression (10) perpendiculairement contre le poussoir (8), le poussoir (8) présentant sur une zone d'extrémité une configuration en forme de V, orientée transversalement par rapport à la longueur et présentant de ce fait une première et une deuxième surfaces inclinées (13, 14) orientées de façon à agir dans le sens inverse de celui-ci, surfaces inclinées dont la première (13) coopère avec une surface inclinée (26), lui correspondant du verrou de fermeture (9) et la deuxième (14) coopère avec une surface inclinée, lui correspondant, de l'élément (10), de telle façon que, lors d'un actionnement du poussoir, s'effectue un mouvement de déverrouillage du verrou de fermeture (9) et, simultanément un déplacement, opposé à ce mouvement, de l'élément de pression (10).

5. Cendrier selon la revendication 4, caractérisé en ce que les surfaces inclinées (13, 14 21) présentent chacune un angle de pente de 45° par rapport à la direction de déplacement du poussoir (8).

6. Cendrier selon la revendication 4 ou 5, caractérisé en ce que le verrou de fermeture (9) est disposé imperdable sur le réceptacle à cendres (1) et présente, en vue de la limitation de sa course de déplacement, un ergot (19) prenant appui sur une butée (18) du réceptacle à cendres (1).

7. Cendrier selon l'une des revendications 4 à 6, caractérisé en ce que l'élément de pression (10) présente à une extrémité une forme en coin correspondant à la configuration en V d'une zone d'extrémité du poussoir.

8. Cendrier sel on l'une des revendications 4 à 7, caractérisé en ce que l'extrémité libre du poussoir est réalisée sous forme de bouton poussoir (12).

9. Cendrier sel on l'une des revendications 4 à 8, caractérisé en ce que le poussoir (8) se trouve en face extérieure du fond (3), le bouton poussoir (12) se trouve en face avant (2) et le verrou de fermeture (9) se trouve en face extérieure de la paroi arrière du réceptacle à cendres (1).

10. Cendrier sel on l'une des revendications 4 à 9 caractérisé en ce que le poussoir (8), le verrou de fermeture (9) et l'élément de pression (10) sont réalisés sous forme de pièces moulés par injection en matière synthétique.

11. Cendrier sel on l'une des revendications 1 à 3, caractérisé en ce que le mécanisme de déverrouillage (5) présente un levier pivotant comme organe de transmission entre le verrou de fermeture (9), d'une part, et le bouton poussoir (12), d'autre part.

12. Cendrier selon la revendication 11, caractérisé en ce que, sur le levier pivotant (24) monté en rotation sur sa zone à peu près médiane en face extérieure du fond (3) du réceptacle à cendres (1), sont articulés, à une extrémité, le verrou de fermeture (9) et à l'autre extrémité, la touche d'actionnement (12), de telle façon que le verrou de fermeture (9) soit déplaçable avec une direction de déplacement chaque fois opposée, à peu près parallèlement à la touche d'actionnement (12).

13. Cendrier selon la revendication 11 ou 12, caractérisé en ce que le levier pivotant (24) est porté, en un agencement mobile pivotant, par le réceptacle à cendres (1), tandis que le levier pivotant (24) porte le verrou de fermeture (9) et la touche d'actionnement (12), chaque fois en un agencement mobile par pivotement.

14. Cendrier selon l'une des revendications 11 à 13, caractérisé en ce que les zones d'extrémité libre du levier pivotant (24) présentent des tourillons de palier (27) formés d'un seul tenant en face extérieure, susceptible de s'encliqueter, dans des logements de palier (26) réalisés en forme de trous allongés, du verrou de fermeture (9) et de la touche d'actionnement (12), en vue d'établir des liaisons mobiles pivotantes.

15. Cendrier selon l'une des revendications 11 à 14, caractérisé en ce que le réceptacle à cendres (1) est réalisé avec des guidages (28, 30) destinés au verrou de fermeture (9) et à la touche d'actionnement (12).

16. Cendrier selon l'une des revendications 11 à 15, caractérisé en ce que la touche d actionnement (12) s'encliquète dans le guidage (30) prévu pour elle du réceptacle à cendres (1), à l'encontre de la force d'un ressort de rappel (11) la sollicitant en permanence et prenant appuie à l'autre extrémité sur le réceptacle à cendres (1) et en ce que la touche d' actionnement (12) peut prendre appui avec des ergots d'encliquetage (21) sur des bordures d'évidement (32) réalisées dans le guidage (30) et être déplacée à l'encontre de la force du ressort de rappel (11), la course de déplacement de la touche d'actionnement (12) sur le levier pivotant (24) étant transmise directement au verrou de fermeture (9), dans le sens d'un déplacement de déverrouillage.

17. Cendrier selon l'une des revendications 11 à 16 caractérisé en ce que le levier pivotant (24), le verrou de fermeture (9) et la touche d'actionnement (12) sont réalisés sous forme de pièces moulées en injection, en matière synthétique.

18. Cendrier selon l'une des revendications 1 à 17, caractérisé en ce que le verrou fermeture (9) présente, à son extrémité coopérant avec une butée de boîtier (7), une pente de franchissement 17.
